(19) European Patent Office

(11) EP 3 187 847 B1

(12) **EUROPEAN PATENT SPECIFICATION**

(45) Date of publication and mention
of the grant of the patent:
**13.02.2019 Bulletin 2019/07**

(51) Int Cl.:
**G01L 7/00** *(2006.01)*        **G01L 9/00** *(2006.01)*
**G01L 9/02** *(2006.01)*        **G01L 19/00** *(2006.01)*

(21) Application number: **15307188.1**

(22) Date of filing: **31.12.2015**

(54) **PRESSURE MEASUREMENT**

DRUCKMESSUNG

MESURE DE PRESSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.07.2017 Bulletin 2017/27**

(73) Proprietor: **Itron Global SARL
Liberty Lake WA 99019 (US)**

(72) Inventor: **STAUB, Frederic
Liberty Lake, WA 99019 (US)**

(74) Representative: **Morrall, Jonathan Ian McLachlan
et al
Kilburn & Strode LLP
Lacon London
84 Theobalds Road
London WC1X 8NL (GB)**

(56) References cited:
**DE-A1- 10 131 229        US-A1- 2015 204 745**

**Description**

FIELD OF THE DISCLOSURE

This disclosure relates generally to pressure measurement, and more specifically relates to pressure measurement using a Wheatstone bridge.

BACKGROUND

A typical pressure measuring device using a Wheatstone bridge-based sensor may require complex, expensive, and powerful electronics to drive it, especially if the sensor output signal level required is very small (e.g., 3mV/V). For use in or with, for example, a water or gas metering device, there is very little room for the driving electronics, and the use of external pre-amplified pressure sensors is not ideal as these sensors do not work well with the low voltage requirements of these typically battery-powered metering devices (e.g., on the order of 2.8-3.0V). Current pressure measurement solutions typically use amplifiers to have a voltage signal usable directly by an analog-to-digital converter that may be included in the microprocessor of an electronic board. The amplification is on the voltage difference between the two signal pins of the sensor. For this implementation, control of a direct supply voltage would be needed, and/or an additional measurement may be needed for this supply voltage value, which would further add to the cost. In addition, the use of a direct supply voltage may contribute to an accidental or unintentional short-circuit that could cause the pressure measuring device to fail or reset. DE10131229A in accordance with its abstract, describes a sensor to register a physical value, e.g. a pressure level. The sensor has a sensor section to generate and deliver a voltage according to the physical value being measured. The voltage is passed to a signal processing circuit to give a representative voltage of the registered pressure. A reference voltage is passed to the signal processing circuit during a test phase, to check that the signal processing circuit is functioning correctly.

BRIEF DESCRIPTION OF THE DRAWINGS

FIG. 1 is an illustration of an example pressure measurement circuit, according to an embodiment of this disclosure.
FIGs. 2A and 2B are graphs showing example voltage ramps used for determining pressure, according to embodiments of this disclosure.
FIG. 3 depicts an example Wheatstone bridge.
FIG. 4 is a time diagram showing an example measurement sequence, according to an embodiment of this disclosure.
FIGs. 5A and 5B are graphs showing example voltage ramps used for determining pressure, where the measurement circuit uses additional resistance in its bridge than in the example of FIGs. 2A and 2B, according to embodiments of this disclosure.
FIG. 6 is an example of a measurement plot showing pressure variations and averages using a measurement circuit, according to an embodiment of this disclosure.
FIG. 7 is an example measurement plot in comparison with a pressure reference value, according to an embodiment of this disclosure.
FIGs. 8A, 8B, and 9 are flow diagrams of an example pressure measurement process, according to embodiments of this disclosure.
FIG. 10 is a block diagram of an example computing device that may be used to implement one or more aspects of the technology described herein, according to an embodiment of the present disclosure.

In the drawings, the leftmost digit(s) of a reference number may identify the drawing in which the reference number first appears.

DETAILED DESCRIPTION

In the following disclosure, a low-cost pressure measurement solution is described that takes up very little space on a circuit board and has very low power consumption. This implementation further protects against a short circuit of the sensor due to the connections to the pressure sensor being serialized with on-board resistors. In an aspect of the present invention there is provided a device for pressure measurement as defined in claim 1. In another aspect of the present invention there is provided a method for measuring pressure as defined in claim 14.
Embodiments are now described with reference to the figures, where like reference numbers may indicate identical or functionally similar elements. While specific configurations and arrangements are discussed, it should be understood that this is done for illustrative purposes only. A person skilled in the relevant art will recognize that other configurations and arrangements can be used without departing from the spirit and scope of the description. It will be apparent to a person skilled in the relevant art that the technology disclosed herein can also be employed in a variety of other systems and applications other than what is described herein.

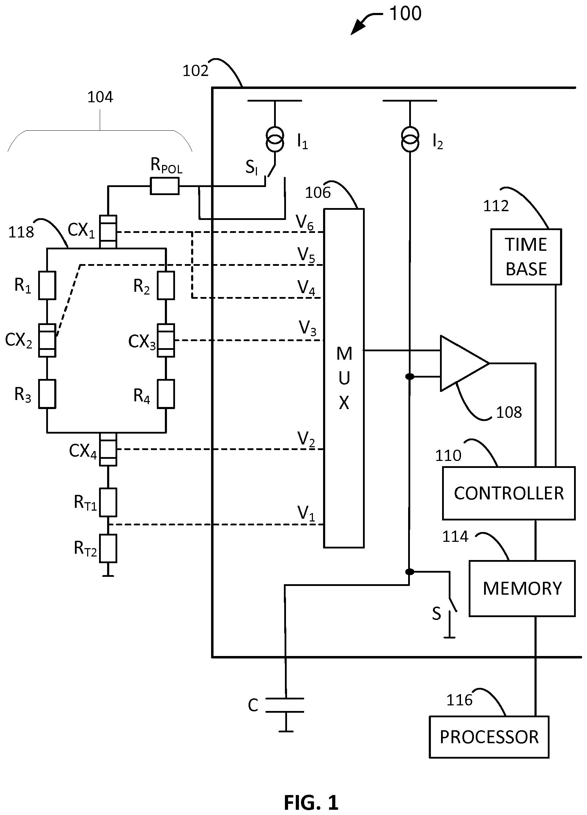

FIG. 1 is an illustration of an example circuit 100 that can be used for pressure measurement, according to an embodiment. Example circuit 100 includes an integrated circuit 102 (such as an application-specific integrated circuit (ASIC), for example), a pressure sensor 104, and a capacitor C. Capacitor C may be present on integrated circuit 102, or may be external to integrated circuit 102. In the embodiment shown, the integrated circuit 102 is shown to include a multiplexer 106, a comparator 108, a controller 110, a time base or time base input 112, a memory 114, a first current source $I_1$, a second current source $I_2$, and a switch S. The time base 112 may be present on integrated circuit 102, or may be an input to integrated circuit 102. Memory 114 may be comprised of one or more registers accessible by a processor 116. Processor 116 may be present on integrated circuit 102, or may be external to integrated circuit 102. An output of multiplexer 106 is coupled with a first input of comparator 108. Capacitor C has a first end coupled with a second input of comparator 108 and to current source $I_2$, and has a second end coupled with ground. Switch S has a first end coupled to the first end of capacitor C and a second end coupled with ground. Current source $I_1$ provides a current to sensor 104 via a first or second branch of sensor 104, which may be controlled via a switch $S_I$. The current provided by current source $I_1$ may be provided by applying a voltage to sensor 104, where the current is defined by the applied voltage and serial resistors present in the sensor.

Sensor 104 is shown to include a Wheatstone bridge 118, having connection points $CX_1$-$CX_4$, and resistors $R_1$-$R_4$, as shown. Sensor 104 also includes a first resistor $R_{POL}$ coupled between current source $I_1$ and connection point $CX_1$, and two transition resistors $R_{T1}$ and $R_{T2}$ in series, coupled between connection point $CX_4$ and ground. In two respective cycles of operation, one for each branch of Wheatstone bridge 118, when a current is forced through $R_{POL}$ and the rest of sensor 104, in the first branch during a first cycle, potentials $V_2$, $V_3$, and $V_4$ are provided as inputs to multiplexer 106 from connection points $CX_4$, $CX_3$, and $CX_1$, respectively, and in the second branch during a second cycle, potentials $V_2$, $V_5$, and $V_6$ are provided as inputs to multiplexer 106 from connection points $CX_4$, $CX_2$, and $CX_1$, respectively. In each cycle, a reference voltage $V_1$ is also provided to multiplexer 106 from between transition resistors $R_{T1}$ and $K_{T2}$.

In operation, once current is applied to the first branch of sensor 104, and all potentials $V_1$-$V_6$ are stable (e.g., after a predetermined wait time once the current is applied), potential $V_1$ is provided from multiplexer 106 to the first input of comparator 108, current source $I_2$ starts charging capacitor C, and a start time is noted by controller 110 based on time base 112. The start time may be saved in memory 114. The capacitor charge creates a constant voltage ramp that is provided to the second input of comparator 108. When the voltage ramp reaches potential $V_1$, as determined by comparator 108, multiplexer 106 then provides potential $V_2$ to the first input of comparator 108. When the voltage ramp reaches potential $V_2$, as determined by comparator 108, controller 110 determines a time $T_2$ based on the start time, and multiplexer 106 then provides potential $V_3$ to the first input of comparator 108. When the voltage ramp reaches potential $V_3$, as determined by comparator 108, controller 110 determines a time $T_3$ based on the start time, and multiplexer 106 then provides potential $V_4$ to the first input of comparator 108. When the voltage ramp reaches potential $V_4$, as determined by comparator 108, controller 110 determines a time $T_4$ based on the start time. Determined times $T_2$, $T_3$, and $T_4$ may be saved to memory 114. Capacitor C is then discharged to reset the voltage ramp for the next cycle. In the embodiment shown, capacitor C can be discharged by closing switch S. Switch S would then be reopened prior to starting the next cycle. In other embodiments, capacitor C may be discharged in another manner that may not require use of a switch S.

In a second cycle, current is applied to the second branch of sensor 104. Once all potentials $V_1$-$V_6$ are stable (e.g., after a predetermined wait time once the current is applied), potential $V_1$ is provided from multiplexer 106 to the first input of comparator 108, current source $I_2$ begins charging capacitor C, and another start time is noted by controller 110 based on time base 112. The start time may be saved in memory 114. The capacitor charge creates another constant voltage ramp that is provided to the second input of comparator 108. When the voltage ramp reaches potential $V_1$, as determined by comparator 108, multiplexer 106 then provides potential $V_2$ to the first input of comparator 108. When the voltage ramp reaches potential $V_2$, as determined by comparator 108, controller 110 determines a time $T'_2$ based on the start time, and multiplexer 106 then provides potential $V_5$ to the first input of comparator 108. When the voltage ramp reaches potential $V_5$, as determined by comparator 108, controller 110 determines a time $T_5$ based on the start time and multiplexer 106 then provides potential $V_6$ to the first input of comparator 108. When the voltage ramp reaches potential $V_6$, as determined by comparator 108, controller 110 determines a time $T_6$ based on the start time. Determined times $T'_2$, $T_5$, and $T_6$ may be saved to memory 114.

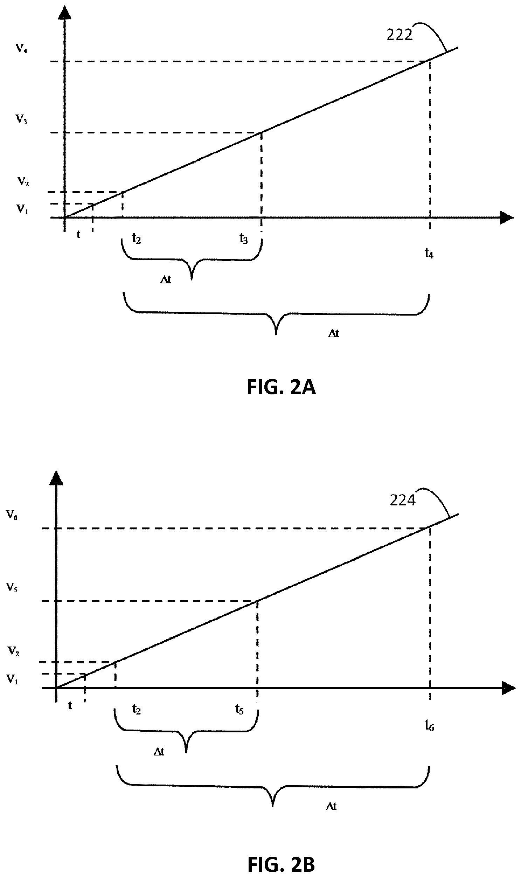

The process described above is based on a single slope converter that translates voltages into time values where the relationship is proportional. FIGs. 2A and 2B are graphs showing example voltage ramps used as described above, according to embodiments. The voltage ramps of FIGs. 2A and 2B show respective voltage thresholds and the times it took to reach each threshold. FIG. 2A shows voltage ramp 222 as used during the first cycle (using the first branch of Wheatstone bridge 118), to determine times $T_2$, $T_3$, and $T_4$. FIG. 2B shows voltage ramp 224 as used during the second cycle (using the second branch of Wheatstone bridge 118), to determine times $T'_2$, $T_5$, and $T_6$. If voltage ramp adjustment is desired for improved accuracy, the value of the current source $I_2$ may be adjusted (e.g., via a communication bus, such as a serial peripheral interface (SPI)).

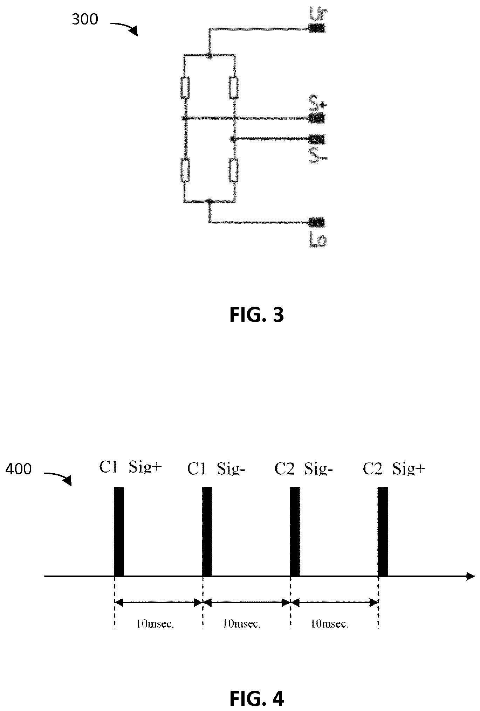

In the above-described embodiment, a Wheatstone bridge is used, as would be understood by those of ordinary skill in the relevant art. An example of a Wheatstone bridge 300 is shown in FIG. 3. A Wheatstone bridge may provide, for example, an output value 1.5 to 4.5 mV/V at nominal pressure, with an impedance of a few kilo-ohms (depending on the model). Bridge impedance is generally specified with a +/-30% tolerance.

In the above-described embodiment, the integrated circuit 102 may handle the entire time determining sequence without any interaction from an external processor. For mains frequency rejection, each sensor branch may be measured twice, according to, for example, time diagram 400 of FIG. 4, where:

    C1_Sig+ represents the measurement cycle 1 for signal+ measurement;
    C1_Sig- represents the measurement cycle1 for signal- measurement;
    C2_Sig- represents the measurement cycle2 for signal- measurement; and
    C2_Sig+ represents the measurement cycle2 for signal+ measurement.

The measurement sequence may be executed by, for example, a command (such as, for example, an SPI command), from a processor (part of, or external to, the integrated circuit). The pause shown between each measurement cycle (where 10msec is just an example) may be configured by, for example, configuration bits of the command. In an embodiment, the sequence order may be inverted via configuration (e.g., via SPI configuration). The measurement results may be read by a processor when the complete measurement sequence is finished (e.g., via an SPI bus). An interrupt signal may be generated at the end of the complete measurement sequence as a notification that the results are available in the integrated circuit memory.

A signal from the pressure sensor may be a voltage stated in mV by V (mV/V) applied, according to: **P = k\*dv/V,** where **k** is a sensitivity of the sensor (where k may need to be calibrated). The pressure signal is the voltage difference between S+ and S- and is ratio-metric with the Ur-Lo voltage (see FIG. 3). The difference (S+)-(S-) is equivalent to $T_5$-$T_3$. Ur-Lo voltage is equivalent to $T_4$-$T_2$ or $T_6$-$T'_2$ (since $T_4$ and $T_6$ are measured at the same location on the sensor). So, initially, the pressure calculation may be expressed as:

$$P = k * \left(\frac{T5-T3}{T4-T2}\right) \qquad \textbf{Eqn 1}$$

where $T_1$ = (C\*$V_1$)/i; $T_2$ = (C\*$V_2$)/i; etc.... through $T_6$ and C is the capacitance of capacitor C (FIG. 1).

Thus, Equation 1 rewritten, becomes:

$$P = k * \left(\left(\frac{C}{i}\right) * V5 - \left(\frac{C}{i}\right) * V3\right) / \left(\left(\frac{C}{i}\right) * V4 - \left(\frac{C}{i}\right) * V2\right) \qquad \textbf{Eqn 2}$$

where C is the capacitance of capacitor C and i is the current through capacitor C (FIG. 1).

It should be noted that $T_4$-$T_2$ is not equivalent to $T_6$-$T'_2$ because of supply variations in the different branches. Therefore, corrective terms may be used to represent each branch. For the first branch, $T_4$-$T_2$ can be used, and for the second branch, $T_6$-$T'_2$ can be used. $T_5$ and $T_3$ are respectively relative to $T_6$, $T_2$ and $T_4$, $T'_2$, so for **P=k\*dV/V,** the following equation may be used:

$$P = k * \left(\frac{T5-T2}{T6-T2}\right) - \left(\frac{T3-T'2}{T4-T'2}\right) \qquad \textbf{Eqn 3}$$

As stated earlier, the value of **k** is an expression for the sensitivity of the sensor and is specific to an individual sensor:

$$k = Pnominal/Sensitivity \qquad \textbf{Eqn 4}$$

Typically, **k** may have a value in the range of 1K to 10K. As a numerical example, for a sensor having a sensitivity of 4.5 mV/V for 16 bars full scale, **k** will be:

$$k = \frac{16}{4.5e^{-3}} = 3555 \qquad \text{Eqn 5}$$

The value of **k** may need to be calibrated.

An offset may need to be taken into account in the pressure determination; otherwise, the determination of pressure may be off by a significant amount. The following equation takes an offset **Pz** into account:

$$P = k * \left( \frac{T5 - T2}{T6 - T2} - \frac{T3 - T'2}{T4 - T'2} \right) + Pz \qquad \text{Eqn 6}$$

The values of both sensitivity **k** and offset **Pz** may need to be calibrated. For example, it may take at least two pressure measurements to determine sensitivity **k** and offset **Pz** for a given sensor.

The definition of the measurement may be based on the time pitch used and also the sensitivity of the sensor. A look at some examples follow, including a more optimum example and a less optimum example. In the more optimum example (Case 1), a 4.5mV/V sensor with a nominal value of 16 bars may be used, and in the less optimum example (Case 2), a 1.6mV/V sensor with a nominal value of 40 bars may be used. In these examples, an integration time (capacitor charge time) is 100 microseconds, with a time pitch of 60 picoseconds.

The definition determination may depend on tolerance on sensor impedance, where $V_{minsensor}$ may be expressed as:

$$Vminsensor = Vcc * Rminsensor/(Rminsensor + R2 + Rref + Rpol) \qquad \text{Eqn 7}$$

If $V_{cc}$ = 3V, $R_{minsensor}$ = 3kOhms-30%, $R_2$ = 6.8kOhms, $R_{ref}$ = 220 Ohms, and $R_{pol}$ = 220 Ohms, then $V_{minsensor}$ = 0.674 V.

In Case 1, ΔVsensor may be expressed as:

$$\Delta Vsensor = Vminsensor * Sensitivity = 0.674 * 4.5e^{-3} = 3.033 \text{ mV} \qquad \text{Eqn 8}$$

and with a $T_{ramp}$ of 100 microseconds for a $V_{maxramp}$ of 1.25V, for nominal pressure:

$$\Delta T = \Delta Vsensor * \frac{Tramp}{Vmaxramp} = 3.033e^{-3} * \frac{100e^{-6}}{1.25} \qquad \text{Eqn 9}$$

$$= 0.2426 \text{ microseconds with 16 bars}$$

With a time quantification better than 60 picoseconds, then:

$$\Delta P = \frac{60\text{psec} * \text{Pnominal}}{\Delta T} = \frac{60e^{-12} * 16}{0.2426^{-6}} = 3.96 \, mbar \qquad \text{Eqn 10}$$

This shows that the sensor definition for this example (Case 1) is better than 3.96 mbar.

In Case 2, ΔVsensor may be expressed as:

$$\Delta Vsensor = Vminsensor * Sensitivity = 0.674 * 1.6e^{-3} = 1.078 \text{ mV} \qquad \text{Eqn 11}$$

and with a $T_{ramp}$ of 100 microseconds for a $V_{maxramp}$ of 1.25V, for nominal pressure:

$$\Delta T = \Delta Vsensor * \frac{Tramp}{Vmaxramp} = 1.078e^{-3} * \frac{100e^{-6}}{1.25} \qquad \text{Eqn 12}$$

$$= 0.0862 \text{ microseconds with 40 bars}$$

With a time quantification better than 60 picoseconds, then:

$$\Delta P = \frac{60psec*Pnominal}{\Delta T} = \frac{60e^{-12}*40}{0.0862e^{-6}} = 28 \, mbar \qquad \text{Eqn 13}$$

This shows that the sensor definition for this example (Case 2) is better than 28 mbar.

Based on the formula shown in Equation 6, measurement precision may be expressed as:

$$\Delta P = k * \left( \left( \frac{\Delta T5}{T6-T2} \right) + \left( \frac{T6*\Delta T2}{(T6-T2)^2} \right) + \left( \frac{(T5-T2)*\Delta T6}{(T6-T2)^2} \right) \right.$$
$$\left. + \left( \frac{\Delta T3}{T4-T'2} \right) + \left( \frac{T4*\Delta T'2}{(T4-T'2)^2} \right) + \left( \frac{(T5-T2)*\Delta T2}{T4-T'2} \right) \right) \qquad \text{Eqn 14}$$

It should be noted that the precision of the value of sensitivity **k** is not shown here. As stated earlier, sensitivity **k** may be calibrated. With $T_4$ and $T_6$ of 100 microseconds, $T_2$ of 12 microseconds, $T_5$ and $T_3$ of 53 microseconds, and ΔTx of 60 picoseconds, for Case 1, ΔP = 12 mbar, and for Case 2, ΔP = 85 mbar. Other factors may be taken into account for precision, including, but not limited to, a temperature coefficient, a long-term coefficient, etc., which are not discussed herein.

Measurement precision may be limited by noise (e.g., comparator noise). Example results may show a standard deviation of 20 microvolts and 100 microvolts for a min-max gap. For a pressure sensor, a standard deviation due to comparator noise may be expressed as:

$$\Delta Pnoise = Pnominal * \left( \frac{Vnoise}{Sensitivity} \right) \qquad \text{Eqn 15}$$

For Case 1:

$$\Delta Pnoise = 16 * \left( \frac{20e^{-6}}{4.5e^{-3}} \right) = 71.1 \, mBars \qquad \text{Eqn 16}$$

**and**

$$\Delta Pnoiseminmax = 71.1 * 5 = 355.5 \, mBars \qquad \text{Eqn 17}$$

In this case, the noise may be reduced by multiple acquisitions. Reducing the canal to 0.1 bar may involve about 12 measurements. In this case, standard deviation may be about 20 mbars.

For Case 2:

$$\Delta Pnoise = 40 * \left( \frac{20e^{-6}}{1.6e^{-3}} \right) = 500 \, mbars \qquad \text{Eqn 18}$$

**and**

$$\Delta Pnoiseminmax = 500 * 5 = 2.5 \, bars \qquad \text{Eqn 19}$$

In this case, the noise may be reduced by multiple acquisitions (about 16 measurements), but reducing the canal to 0.1 bar is not possible. In this case, standard deviation may be about 125 mbars, and a min-max gap may be about 625 mbars.

For global precision, quantification noise and comparator noise are added. Electronic noise can be added to the noise from the quantification formula:

$$\text{For Case 1 --- } \text{Global } \Delta P = 0.35 + 0.012 = 0.37 \text{ bar (min max gap)}$$

$$\text{For Case 2 --- } \text{Global } \Delta P = 2.5 + 0.085 = 2.6 \text{ bar (min max gap)}$$

Handling noise is one of the greatest difficulties in pressure measurement. In cases with poor sensor signals, averaging over multiple measurements and/or signal-to-noise ratio improvements may be needed. One way to improve signal-to-noise ratio is to select resistor $R_{POL}$ (FIG. 1) as a function of the value of the pressure sensor impedance. Another way to improve signal-to-noise ratio is to add more resistance (e.g., add more resistors) to each branch of the Wheatstone bridge (bridge 118 of FIG. 1) to further divide voltage related to $T_4$ and $T_6$:

$$\boldsymbol{P = k * n * \left( \frac{T5 - T2}{T6 - T2} - \frac{T3 - T'2}{T4 - T'2} \right) + P'z} \qquad \textbf{Eqn 20}$$

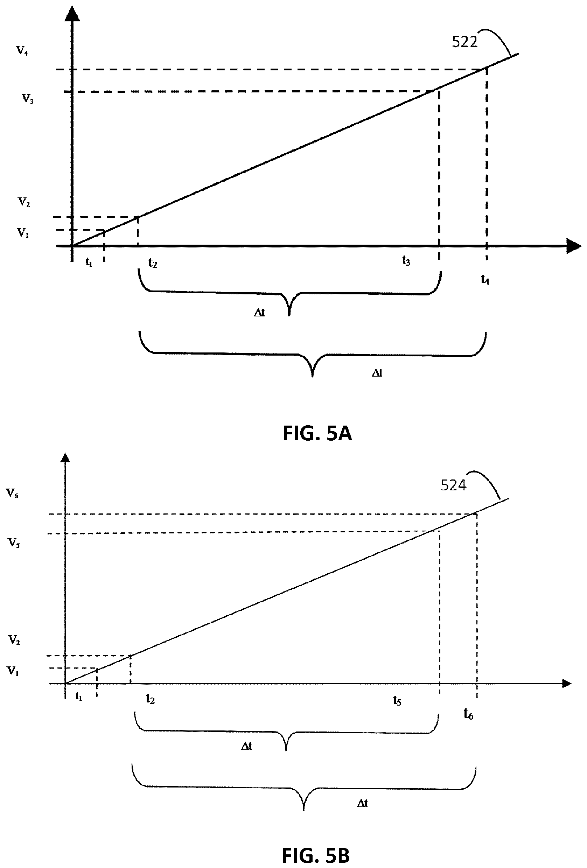

where **n<1, k\*n<k,** and **P'z** is an offset. With this further voltage division, the signal is less amplified and noise is reduced. Example results of this modification is shown in FIGs. 5A and 5B. FIGs. 5A and 5B are graphs that show example voltage ramps resulting from charging capacitor C (FIG. 1) when further dividing the voltage as just described, according to embodiments. The voltage ramps of FIGs. 5A and 5B show respective voltage thresholds and the times it took to reach each threshold. FIG. 5A shows voltage ramp 522 as used during the first cycle (using the first branch of Wheatstone bridge 118), to determine times $T_2$, $T_3$, and $T_4$. FIG. 5B shows voltage ramp 524 as used during the second cycle (using the second branch of Wheatstone bridge 118), to determine times $T'_2$, $T_5$, and $T_6$. As can be seen in FIGs. 5A and 5B, the difference between $T_5$ and $T_6$ is much smaller than it was without further voltage division (as compared to the voltage ramps shown in FIGs. 2A and 2B). In both of these possible signal-to-noise ratio improvement methods (selection of $R_{POL}$ and further voltage division), noise is reduced by increasing the signal level. For an even better result, both methods may be used together.

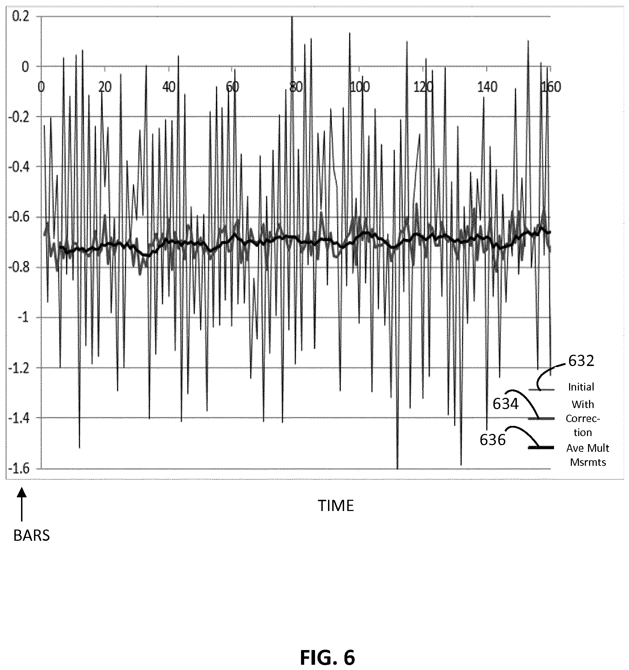

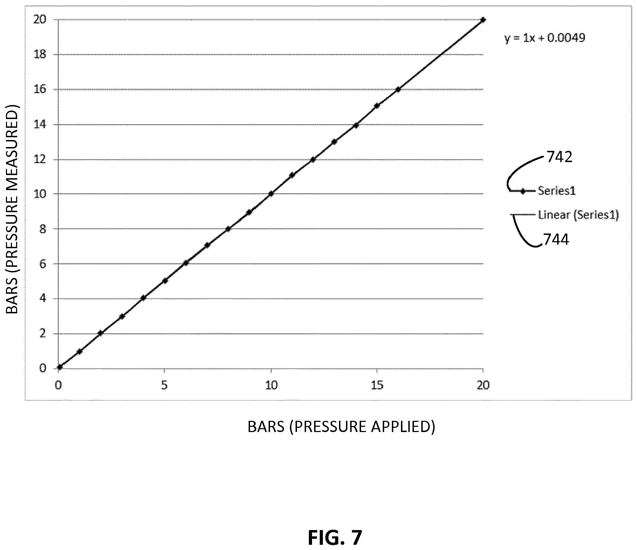

FIGs. 6 and 7 show example results from one or more working prototypes of a pressure measurement circuit, according to one or more embodiments.

FIG. 6 is an example of a measurement plot showing calculated pressure variations (around 0 bars) using a measurement circuit, according to an embodiment. In the plot, the solid line 632 shows results using an initial pressure calculation, using Equation 1, for example. The dot-dash line 634 shows results when including corrective terms, using Equation 3, for example. The dashed line 636 shows averages of multiple measurements. In this example, measurements are taken each second. As can be seen in this example, the measurements are shown as negative, which can occur when, for example, the pressure is near zero bars and the measurements are affected by noise and/or offset of the sensor.

FIG. 7 is an example measurement plot 742 in comparison with applied pressure 744 for a given pressure measurement circuit, according to an embodiment. As can be seen in the figure, the plot 742 is almost exactly overlaying the applied pressure line 744, showing good measurement accuracy.

Prototype measurement results have also shown that this solution is suitable for low power systems. In one example, a six-measurement sequence every 15msec uses only 0.5 microamps with measurement done every minute.

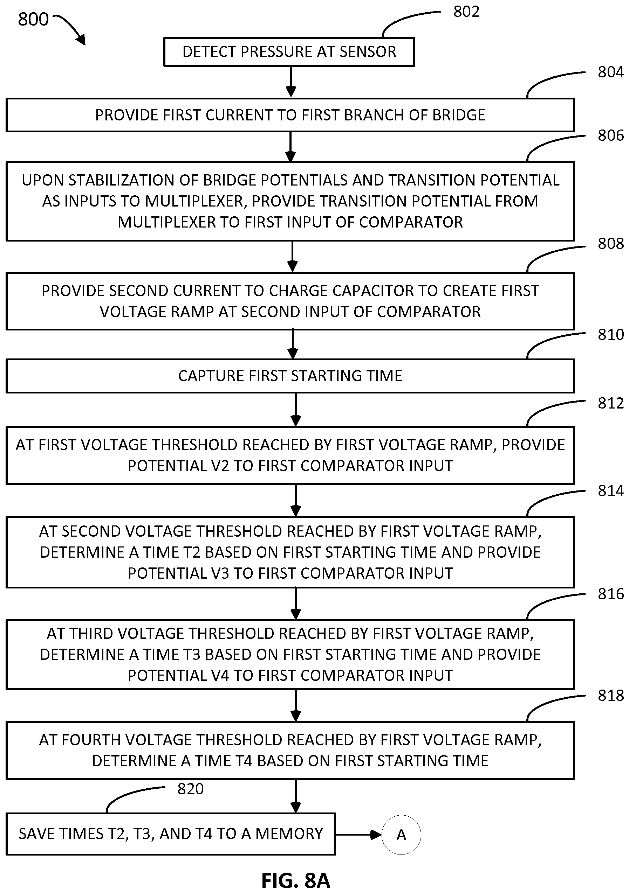

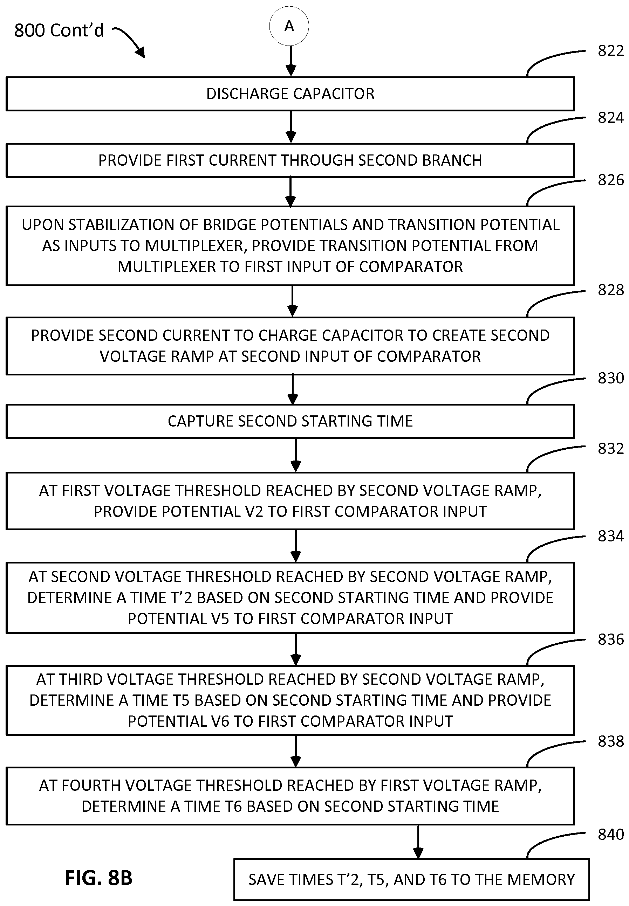

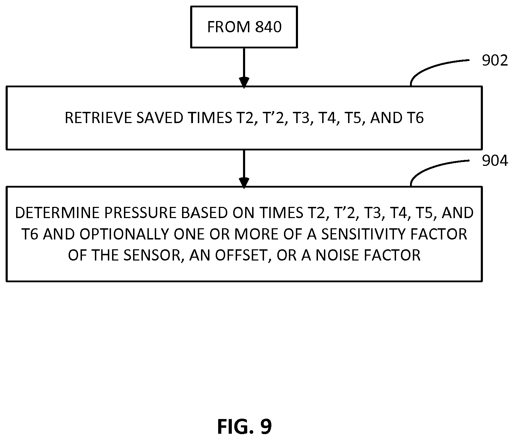

FIGs. 8A, 8B, and 9 are flow diagrams of an example pressure measurement process, from the perspective of an integrated circuit (e.g., integrated circuit 102 of FIG. 1) of a pressure measurement device, according to embodiments. In FIG. 8A, process 800 begins at 802, when pressure is detected at an associated sensor coupled with the integrated circuit. At 804, a first current is provided through a first branch of a Wheatstone bridge of the sensor. At 806, upon stabilization of bridge potentials (e.g., $V_2$-$V_6$) and a transition potential (e.g., $V_1$) from between serial resistors of the bridge, where the bridge potentials and the transition potential are inputs to a multiplexer (e.g., multiplexer 106 of FIG. 1) of the integrated circuit, the transition potential $V_1$ is provided from the multiplexer to a first input of a comparator (e.g., comparator 108 of FIG. 1) of the integrated circuit. At 808, a second current is provided to charge a capacitor (e.g., capacitor C of FIG. 1) associated with the integrated circuit to create a first voltage ramp at a second input to the comparator. At 810, a first starting time is captured. At 812, at a first voltage threshold reached by the first voltage ramp, as determined by the comparator, bridge potential $V_2$ is provided from the multiplexer to the first comparator input. At 814, at a second voltage threshold reached by the first voltage ramp, as determined by the comparator, time $T_2$ is

determined based on the first starting time, and bridge potential $V_3$ is provided to the first comparator input. At 816, at a third voltage threshold reached by the first voltage ramp, as determined by the comparator, time $T_3$ is determined based on the first starting time, and bridge potential $V_4$ is provided to the first comparator input. At 818, at a fourth voltage threshold reached by the first voltage ramp, as determined by the comparator, time $T_4$ is determined based on the first starting time. At 820, determined times $T_2$, $T_3$, and $T_4$ are saved to a memory (e.g., memory 114 of FIG. 1) of the integrated circuit. Process 800 continues in FIG. 8B.

At 822, the capacitor is discharged to reset the voltage ramp. At 824, the first current is provided through a second branch of the Wheatstone bridge of the sensor. At 826, upon stabilization of bridge potentials $V_2$-$V_6$ and transition potential $V_1$, the transition potential $V_1$ is provided from the multiplexer to the first input of the comparator. At 828, the second current is provided to charge the capacitor to create a second voltage ramp at the second input to the comparator. At 830, a second starting time is captured. At 832, at a first voltage threshold reached by the second voltage ramp, as determined by the comparator, bridge potential $V_2$ is provided from the multiplexer to the first comparator input. At 834, at a second voltage threshold reached by the second voltage ramp, as determined by the comparator, time $T'_2$ is determined based on the second starting time, and bridge potential $V_5$ is provided to the first comparator input. At 836, at a third voltage threshold reached by the second voltage ramp, as determined by the comparator, time $T_5$ is determined based on the second starting time, and bridge potential $V_6$ is provided to the first comparator input. At 838, at a fourth voltage threshold reached by the second voltage ramp, as determined by the comparator, time $T_6$ is determined based on the second starting time. At 840, determined times $T'_2$, $T_5$, and $T_6$ are saved to the memory.

FIG. 9 shows continuing actions of process 800, where at 902, times $T_2$, $T'_2$, $T_3$, $T_4$, $T_5$, and $T_6$ may be retrieved (e.g., by a processor). At 904, pressure may be determined by the processor based on times $T_2$, $T'_2$, $T_3$, $T_4$, $T_5$, and $T_6$, and optionally on corrective factors such as a sensitivity factor associated with the sensor, an offset, and/or a noise factor for further accuracy in determining the pressure. The processor may be a part of the integrated circuit. In an embodiment, the processor may be external to the integrated circuit.

One or more features disclosed herein may be implemented in hardware, software, firmware, and/or combinations thereof, including discrete and integrated circuit logic, application specific integrated circuit (ASIC) logic, and microcontrollers, and may be implemented as part of a domain-specific integrated circuit package, or a combination of integrated circuit packages. The terms software and firmware, as used herein, refer to a computer program product including at least one computer readable medium having computer program logic, such as computer-executable instructions, stored therein to cause a computer system to perform one or more features and/or combinations of features disclosed herein. The computer readable medium may be transitory or non-transitory. An example of a transitory computer readable medium may be a digital signal transmitted over a radio frequency or over an electrical conductor, through a local or wide area network, or through a network such as the Internet. An example of a non-transitory computer readable medium may be a compact disk, a flash memory, SRAM, DRAM, a hard drive, a solid state drive, or other data storage device.

A processing platform of a pressure measurement device may be embodied in any type of mobile and/or non-mobile device. Examples of mobile devices may include, but are not to be limited to, laptop computers, ultra-laptop computers, tablets, touch pads, portable computers, handheld computers, palmtop computers, personal digital assistants (PDAs), e-readers, cellular telephones, combination cellular telephone/PDAs, mobile smart devices (e.g., smart phones, smart tablets, etc.), mobile internet devices (MIDs), mobile messaging devices, mobile data communication devices, mobile media playing devices, cameras, mobile gaming consoles, wearable devices, mobile industrial field devices, etc. Examples of non-mobile devices may include, but are not to be limited to, servers, personal computers (PCs), Internet appliances, televisions, smart televisions, data communication devices, media playing devices, gaming consoles, industrial field devices, metering devices, etc.

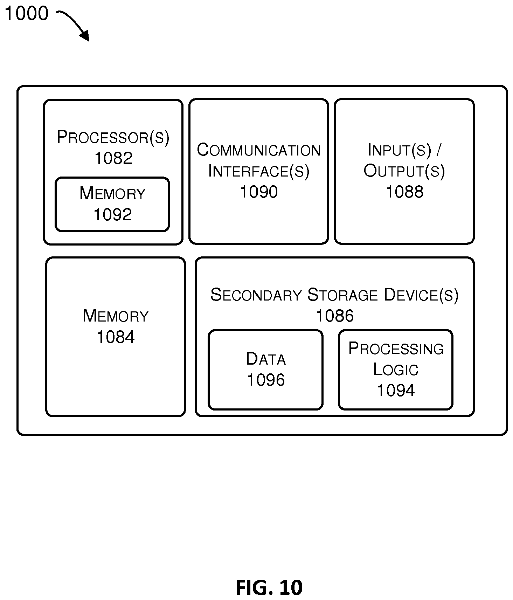

FIG. 10 is a block diagram of an example computing device 1000 that can be used as a processing platform of a pressure measurement device, according to embodiments. For example, computing device 1000 may include processor 116 of FIG. 1 (e.g., if external to the integrated circuit). Computing device 1000 may include one or more processors 1082, memory 1084, one or more secondary storage devices 1086, one or more input/output devices 1088, and/or one or more communication interfaces 1090, in communication via a bus, line, or similar implementation (not shown). Computing device 1000 may also include a power supply (not shown), which may include an interface to an electricity source and/or may include one or more batteries. In an example where computing device 1000 is incorporated into a utility meter, computing device 1000 may also include, or be in communication with, one or more metering registers (not shown) for flow or other measurement, for example.

Processor(s) 1082 may be implemented by, for example but not limitation, one or more integrated circuits, logic circuits, microprocessors, controllers, etc. Processor(s) 1082 may include a local memory 1092 (e.g., a cache). Memory 1084 may include a volatile and/or a non-volatile memory. Volatile memory may be implemented by, for example but not limitation, Synchronous Dynamic Random Access Memory (SDRAM), Dynamic Random Access Memory (DRAM), RAMBUS Dynamic Random Access Memory (RDRAM) and/or any other type of random access memory device. Non-volatile memory may be implemented by flash memory and/or any other desired type of memory device. Access to memory 1084 may be controlled by a memory controller (not shown). Data stored in local memory 1092 and/or memory 1084 may be used by processor(s) 1082 to facilitate pressure sensor data collection functions, metering functions if embodied in a utility meter, communications, etc., according to embodiments of this disclosure.

Input/output device(s) 1088 may allow a user to interface with processor(s) 1082. Input devices may allow a user to enter data and/or commands for processor(s) 1082. Input devices may include, for example, an audio sensor, a microphone, a camera (e.g., still, video, etc.), a keyboard, a button, a mouse, a touchscreen, a track-pad, a trackball, isopoint, a voice recognition system, etc. Output devices may provide or present information to a user. Output devices may include, for example, display devices (e.g., a light emitting diode (LED), an organic light emitting diode (OLED), a liquid crystal display, a cathode ray tube display (CRT), a touchscreen, a tactile output device, a printer, speakers, etc.). The input/output device(s) 1088 may be connected to processor(s) 1082, for example, with an interface circuit (not shown). The interface circuit may be implemented by any type of interface standard, such as, for example, an Ethernet interface, a universal serial bus (USB), a PCI express interface, etc. For use with an output device, the interface circuit may include a graphics driver card, chip, and/or processor.

Communication interface(s) 1090 may be implemented in hardware or a combination of hardware and software, and may provide wired or wireless network interface(s) to one or more networks (e.g., the Internet, or any wide area or local network, for example). Communication interface(s) 1090 may be a part of, or connected with, the interface circuit discussed above, and/or may include or connect with communication devices such as a transmitter, a receiver, a transceiver, a modem and/or network interface card to facilitate exchange of data with external devices (e.g., computing devices of any kind) via a network. Wired and/or wireless communication (e.g., radio frequency (RF), cellular (e.g., 3G, 4G, LTE, LTE Direct, LTE Advanced, LTE-U, etc.), Wi-Fi, WiMAX, etc.) may be used.

Secondary storage device(s) 1086 may store processing logic 1094 (e.g., software) to be executed by processor(s) 1082, and/or may store data 1096. Processing logic 1094 and data 1096 may be used by processor(s) 1082 to facilitate pressure sensor data collection functions, metering functions if embodied in a utility meter, communications, etc., according to embodiments of this disclosure. Processing logic 1094 may include instructions for executing at least some of the pressure determination methodology described herein, for example. Examples of secondary storage device(s) 1086 may include one or more hard drive disks, compact disk (CD) drives, digital versatile disk (DVD) drives, Blu-ray disk drives, redundant array of independent disks (RAID) systems, floppy disk drives, flash drives, etc. Data and/or processing logic may be stored on a removable tangible computer readable storage medium (e.g., a floppy disk, a CD, a DVD, a Blu-ray disk, etc.) using one or more of the secondary storage device(s) 1086.

The embodiments described herein provide pressure measurement (e.g., liquid or gas pressure measurement) using a low-cost, low-power-consumption solution that uses voltage to time conversion. Contrary to previous solutions (e.g., that may rely on amplification of a direct supply voltage), the present solution takes up less space on a board, and has an additional benefit of a reduced chance of a short circuit. The particular examples and scenarios used in this document are for ease of understanding and are not to be limiting. While much of the functionality is described herein as being performed by components that make up an integrated circuit, it is not necessary that the components are part of a single integrated circuit. In addition, though described for use with utility metering devices, features described herein may be used in many other contexts and situations that may or may not involve utility metering. The power/cost-saving features discussed herein may be beneficial in many other systems requiring pressure determining capabilities.

Although certain example methods, apparatus and articles of manufacture have been disclosed herein, the scope of coverage of this patent is not limited thereto. On the contrary, this patent covers all methods, apparatus and articles of manufacture fairly falling within the scope of the claims of this patent.

**Claims**

1. A device for pressure measurement, the device comprising:

a multiplexer (106) having at least six inputs, with six of the at least six inputs coupled with connection points of a sensor (104) comprised of a Wheatstone bridge (118), a first resistor ($R_{POL}$), and two serial transition resistors ($R_{T1}$, $R_{T2}$), wherein the Wheatstone bridge (118) has a first connection point ($CX_1$) to provide a potential $V_4$ or $V_6$, a second connection point ($CX_2$) to provide a potential $V_5$, a third connection point ($CX_3$) to provide a potential $V_3$, and a fourth connection point ($CX_4$) to provide a potential $V_2$, with the first, third, and fourth connection points being part of a first branch, and the first, second, and fourth connection points being part of a second branch, wherein the first resistor ($R_{POL}$) is coupled with the first connection point ($CX_1$), wherein the two serial transition resistors ($R_{T1}$, $R_{T2}$) are coupled with the fourth connection point ($CX_4$) at a first end and with ground at a second end, and wherein a fifth connection point is located between the two serial transition resistors ($R_{T1}$, $R_{T2}$) to provide a potential $V_1$;
a comparator (108) having a first input and a second input, the first input coupled with an output of the multiplexer (106);
a capacitor (C) having a first side coupled to the second input of the comparator (108) and a second side coupled with the ground;
a current source ($I_2$) coupled with the second input of the comparator (108) and to the first side of the capacitor (C) for charging the capacitor (C);
a controller (110) communicably coupled with an output of the comparator (108); and
a memory (114) communicably coupled with the controller (110),
wherein the device is configured to:
in two respective cycles, one cycle for each of the first and second branches, determine by the controller (110), and record in the memory (114), respective times $T_2$, $T_3$, and $T_4$ when each of respective potentials $V_2$, $V_3$, and $V_4$ are reached by a first voltage ramp produced by the capacitor (C) in the first branch, and respective times $T'_2$, $T_5$, and $T_6$ when each of respective potentials $V_2$, $V_5$, and $V_6$ are reached by a second voltage ramp produced by the capacitor (C) in the second branch, wherein the capacitor (C) is discharged between the two cycles.

2. The device of claim 1, wherein the device is configured to, upon detection of pressure at the sensor (104), determine and record times $T_2$, $T'_2$, $T_3$, $T_4$, $T_5$, and $T_6$ by:

providing a first current through the first branch;
upon stabilization of potentials $V_1$-$V_6$, providing potential $V_1$ from the multiplexer (106) to the first input of the comparator (108);
providing a second current from the current source ($I_2$) to charge the capacitor (C), creating the first voltage ramp at the second input of the comparator (108);
capturing a first starting time;
at a first predetermined voltage threshold reached by the first voltage ramp as determined by the comparator (108), providing potential $V_2$ from the multiplexer (106) to the first input of the comparator (108);
at a second predetermined voltage threshold reached by the first voltage ramp as determined by the comparator (108), determining, by the controller (110), a time $T_2$ based on the first starting time and providing potential $V_3$ from the multiplexer (106) to the first input of the comparator (108);
at a third predetermined voltage threshold reached by the first voltage ramp as determined by the comparator (108), determining, by the controller (110), a time $T_3$ based on the first starting time and providing potential $V_4$ from the multiplexer (106) to the first input of the comparator (108);
at a fourth predetermined voltage threshold reached by the first voltage ramp as determined by the comparator (108), determining, by the controller (110), a time $T_4$ based on the first starting time;
saving times $T_2$, $T_3$, and $T_4$ to the memory (114);
discharging the capacitor (C);
providing the first current through the second branch;
upon stabilization of potentials $V_1$-$V_6$, providing potential $V_1$ from the multiplexer (106) to the first input of a comparator (108);
providing the second current from the current source ($I_2$) to charge the capacitor (C) to create the second voltage ramp at the second input of the comparator (108);
capturing a second starting time;
at the first predetermined voltage threshold reached by the second voltage ramp as determined by the comparator (108), providing potential $V_2$ from the multiplexer (106) to the first input of the comparator (108);
at a second predetermined voltage threshold reached by the second voltage ramp as determined by the comparator (108), determining, by the controller (110), a time $T'_2$ based on the second starting time and providing potential $V_5$ from the multiplexer (106) to the first input of the comparator (108);
at a third predetermined voltage threshold reached by the second voltage ramp as determined by the comparator (108), determining, by the controller (110), a time $T_5$ based on the second starting time and providing potential V6 from the multiplexer (106) to the first input of the comparator (108);
at a fourth predetermined voltage threshold reached by the second voltage ramp as determined by the comparator (108), determining, by the controller (110), a time $T_6$ based on the second starting time; and
saving times $T'_2$, $T_5$, and $T_6$ to the memory (114).

3. The device of claim 2, wherein the stabilization of potentials $V_1$-$V_6$ includes waiting for a predetermined wait time.

4. The device of any of claims 1-3, wherein a value of the first resistor ($R_{POL}$) is chosen as a function of a value of a sensor impedance to improve a signal to noise ratio.

5. The device of any of claims 1-4, wherein the first or second voltage ramp is adjustable by adjusting a current value of the current source ($I_2$).

6. The device of any of claims 1-5, wherein the times $T_2$, $T'_2$, $T_3$, $T_4$, $T_5$, and $T_6$ are retrievable by a processor (116) for calculating a pressure.

7. The device of claim 6, wherein the processor (116) is configured to calculate the pressure based on the following equation:

$$P = k * (\frac{T5 - T2}{T6 - T2} - \frac{T3 - T'2}{T4 - T'2})$$

where:

P is the pressure; and
k is a sensitivity of the sensor (104).

8. The device of claim 6, wherein the processor (116) is configured to calculate the pressure based on the following equation:

$$P = k * \left(\frac{T5 - T2}{T6 - T2} - \frac{T3 - T'2}{T4 - T'2}\right) + Pz$$

where:

P is the pressure;
k is a sensitivity of the sensor (104); and
Pz is an offset.

9. The device of any of claims 6-8, wherein the processor (116) is configured to calculate the pressure taking noise limits into account.

10. The device of any of claims 1-6, wherein the Wheatstone bridge (118) includes additional resistance in each branch that further divides voltage related to times $T_4$ and $T_6$ to improve signal to noise ratio.

11. The device of claim 10, wherein the times $T_2$, $T'_2$, $T_3$, $T_4$, $T_5$, and $T_6$ are retrievable by a processor (116) for calculating a pressure, and wherein the processor (116) is configured to calculate the pressure based on the following equation:

$$P = k * n * \left(\frac{T5 - T2}{T6 - T2} - \frac{T3 - T'2}{T4 - T'2}\right) + P'z$$

where:

P is the pressure;
k is a sensitivity of the sensor (104);
n is a factor less than 1 that takes into account the further voltage division; and
P'z is an offset.

12. The device of any of claims 1-11, wherein the device is embodied in a fluid metering device and measures fluid pressure.

13. The device of any of claims 1-11, wherein the device is embodied in a gas metering device and measures gas pressure.

14. A method of measuring pressure, comprising:

detecting pressure at a pressure sensor (104) comprising a Wheatstone bridge (118) having a first connection point ($CX_1$), a second connection point ($CX_2$), a third connection point ($CX_3$), and a fourth connection point ($CX_4$), with the first, second, and fourth connection points being part of a first branch, and the first, third, and fourth connection points being part of a second branch;

providing a first current through the first branch;

upon stabilization of potentials $V_1$-$V_6$, where potentials $V_6$ and $V_4$ are located at the first connection point ($CX_1$), potential $V_5$ is located at the second connection point ($CX_2$), potential $V_3$ is located at the third connection point ($CX_3$), potential $V_2$ is located at the fourth connection point ($CX_4$), and $V_1$ is located between two serial resistors ($R_{T1}$, $R_{T2}$) having a first end coupled with the fourth connection point ($CX_4$) and having a second end coupled with a ground, and where potentials $V_1$-$V_6$ are inputs to a multiplexer (106), providing potential $V_1$ from the multiplexer (106) to a first input of a comparator (108);

providing a second current from a current source ($I_2$) to charge a capacitor (C) to create a first voltage ramp at a second input of the comparator (108), the capacitor (C) having a first side coupled with the second input of the comparator (108) and the second current source ($I_2$), and a second side coupled with the ground;

capturing a first starting time;

at a first predetermined voltage threshold reached by the first voltage ramp as determined by the comparator (108), providing potential $V_2$ from the multiplexer (106) to the first input of the comparator (108);

at a second predetermined voltage threshold reached by the first voltage ramp as determined by the comparator (108), determining a time $T_2$ based on the first starting time and providing potential $V_3$ from the multiplexer (106) to the first input of the comparator (108);

at a third predetermined voltage threshold reached by the first voltage ramp as determined by the comparator (108), determining a time $T_3$ based on the first starting time and providing potential $V_4$ from the multiplexer (106) to the first input of the comparator (108);

at a fourth predetermined voltage threshold reached by the first voltage ramp as determined by the comparator (108), determining a time $T_4$ based on the first starting time;

saving times $T_2$, $T_3$, and $T_4$ to a memory (114);

discharging the capacitor (C);

providing the first current through the second branch;

upon stabilization of potentials $V_1$-$V_6$, providing potential $V_1$ from the multiplexer (106) to the first input of a comparator (108);

providing the second current from the current source ($I_2$) to charge the capacitor (C) to create a second voltage ramp at the second input of the comparator (108);

capturing a second starting time;

at the first predetermined voltage threshold reached by the second voltage ramp as determined by the comparator (108), providing potential $V_2$ from the multiplexer (106) to the first input of the comparator (108);

at a second predetermined voltage threshold reached by the second voltage ramp as determined by the comparator (108), determining a time $T'_2$ based on the second starting time and providing potential $V_5$ from the multiplexer (106) to the first input of the comparator (108);

at a third predetermined voltage threshold reached by the second voltage ramp as determined by the comparator (108), determining a time $T_5$ based on the second starting time and providing potential $V_6$ from the multiplexer (106) to the first input of the comparator (108);

at a fourth predetermined voltage threshold reached by the second voltage ramp as determined by the comparator (108), determining a time $T_6$ based on the second starting time;

saving times $T'_2$, $T_5$, and $T_6$ to the memory (114);

retrieving, by a processor (116), saved times $T_2$, $T'_2$, $T_3$, $T_4$, $T_5$, and $T_6$; and

determining, by the processor (116), the pressure based on times $T_2$, $T'_2$, $T_3$, $T_4$, $T_5$, and $T_6$.

15. The method of claim 14, wherein the determining the pressure takes into account one or more of a sensitivity of the sensor, an offset, or a noise factor.

**Patentansprüche**

1. Vorrichtung zur Druckmessung, die Vorrichtung aufweisend:

einen Multiplexer (106) mit mindestens sechs Eingängen, wobei sechs der mindestens sechs Eingänge mit Verbindungspunkten eines Sensors (104) verbunden sind, der aus einer Wheatstone-Brücke (118), einem ersten Widerstand ($R_{POL}$) und zwei seriellen Überschaltwiderständen ($R_{T1}$, $R_{T2}$) besteht, wobei die Wheatstone-Brücke (118) einen ersten Verbindungspunkt ($CX_1$) zur Bereitstellung eines Potentials $V_4$ oder $V_6$, einen zweiten Verbindungspunkt ($CX_2$) zur Bereitstellung eines Potentials $V_5$, einen dritten Verbindungspunkt ($CX_3$) zur Bereitstellung eines Potentials $V_3$ und einen vierten Verbindungspunkt ($CX_4$) zur Bereitstellung eines Potentials $V_2$ aufweist, wobei der erste, der dritte und der vierte Verbindungspunkt Teil eines ersten Zweigs sind und der erste, der zweite und der vierte Verbindungspunkt Teil eines zweiten Zweigs sind, wobei der erste Widerstand ($R_{POL}$) mit dem ersten Verbindungspunkt ($CX_1$) verbunden ist, wobei die zwei seriellen Überschaltwiderstände ($R_{T1}$, $R_{T2}$) an einem ersten Ende mit dem vierten Verbindungspunkt ($CX_4$) und an einem zweiten Ende mit Erde verbunden sind, und wobei ein fünfter Verbindungspunkt zwischen den zwei seriellen Überschaltwiderständen ($R_{T1}$, $R_{T2}$) to angeordnet ist, um ein Potential $V_1$ bereitzustellen;

einen Komparator (108) mit einem ersten Eingang und einem zweiten Eingang, wobei der erste Eingang mit einem Ausgang des Multiplexers (106) verbunden ist;

einen Kondensator (C) mit einer ersten Seite, die mit dem zweiten Eingang des Komparators (108) verbunden ist, und einer zweiten Seite, die mit Erde verbunden ist;

eine Stromquelle ($I_2$), die mit dem zweiten Eingang des Komparators (108) und mit der ersten Seite des Kondensators (C) verbunden ist, zum Laden des Kondensators (C);

eine Steuerung (110), die kommunizierfähig mit einem Ausgang des Komparators (108) verbunden ist; und

einen Speicher (114), der kommunizierfähig mit der Steuerung (110) verbunden ist,

wobei die Vorrichtung dafür ausgelegt ist:

in zwei jeweiligen Zyklen, einem Zyklus für jeden von dem ersten und dem zweiten Zweig, jeweilige Zeitpunkte $T_2$, $T_3$ und $T_4$, zu denen jedes der jeweiligen Potentiale $V_2$, $V_3$, $V_4$ von einer ersten Spannungsrampe, die durch den Kondensator (C) in dem ersten Zweig erzeugt wird, erreicht wird, und jeweilige Zeitpunkte $T'_2$, $T_5$ und $T_6$, zu denen jedes der jeweiligen Potentiale $V_2$, $V_5$ und $V_6$ von einer zweiten Spannungsrampe, die durch den Kondensator (C) in dem zweiten Zweig erzeugt wird, erreicht wird, durch die Steuerung (110) zu bestimmen und in dem Speicher (114) aufzuzeichnen, wobei der Kondensator (C) zwischen zwei Zyklen entladen wird.

2. Vorrichtung nach Anspruch 1, wobei die Vorrichtung dafür ausgelegt ist, bei Detektion eines Drucks an dem Sensor (104), Zeitpunkte $T_2$, $T'_2$, $T_3$, $T_4$, $T_5$, und $T_6$ zu bestimmen und aufzuzeichnen, durch:

Bereitstellen eines ersten Stroms durch den ersten Zweig;

bei Stabilisierung von Potentialen $V_1$-$V_6$, Bereitstellen von Potential $V_1$ von dem Multiplexer (106) für den ersten Eingang des Komparators (108);

Bereitstellen eines zweiten Stroms von der Stromquelle ($I_2$), um den Kondensator (C) zu laden, wodurch die erste Spannungsrampe an dem zweiten Eingang des Komparators (108) erzeugt wird;

Erfassen eines ersten Startzeitpunkts;

bei einer ersten vorbestimmten Spannungsschwelle, die von der ersten Spannungsrampe erreicht wird, wie durch den Komparator (108) bestimmt, Bereitstellen von Potential $V_2$ von dem Multiplexer (106) für den ersten Eingang des Komparators (108);

bei einer zweiten vorbestimmten Spannungsschwelle, die von der ersten Spannungsrampe erreicht wird, wie durch den Komparator (108) bestimmt, Bestimmen, durch die Steuerung (110), eines Zeitpunkts $T_2$ basierend auf dem ersten Startzeitpunkt und Bereitstellen von Potential $V_3$ von dem Multiplexer (106) für den ersten Eingang des Komparators (108);

bei einer dritten vorbestimmten Spannungsschwelle, die von der ersten Spannungsrampe erreicht wird, wie durch den Komparator (108) bestimmt, Bestimmen, durch die Steuerung (110), eines Zeitpunkts $T_3$ basierend auf dem ersten Startzeitpunkt und Bereitstellen von Potential $V_4$ von dem Multiplexer (106) für den ersten Eingang des Komparators (108);

bei einer vierten vorbestimmten Spannungsschwelle, die von der ersten Spannungsrampe erreicht wird, wie durch den Komparator (108) bestimmt, Bestimmen, durch die Steuerung (110), eines Zeitpunkts $T_4$ basierend auf dem ersten Startzeitpunkt;

Speichern von Zeitpunkten $T_2$, $T_3$ und $T_4$ in den Speicher (114);

Entladen des Kondensators (C);

Bereitstellen des ersten Stroms durch den zweiten Zweig;

bei Stabilisierung von Potentialen $V_1$-$V_6$, Bereitstellen von Potential $V_1$ von dem Multiplexer (106) für den ersten Eingang eines Komparators (108);

Bereitstellen des zweiten Stroms von der Stromquelle ($I_2$), um den Kondensator (C) zu laden, um die zweite Spannungsrampe an dem zweiten Eingang des Komparators (108) zu erzeugen;

Erfassen eines zweiten Startzeitpunkts;

bei der ersten vorbestimmten Spannungsschwelle, die von der zweiten Spannungsrampe erreicht wird, wie durch den Komparator (108) bestimmt, Bereitstellen von Potential $V_2$ von dem Multiplexer (106) für den ersten Eingang des Komparators (108);

bei einer zweiten vorbestimmten Spannungsschwelle, die von der zweiten Spannungsrampe erreicht wird, wie durch den Komparator (108) bestimmt, Bestimmen, durch die Steuerung (110), eines Zeitpunkts $T'_2$ basierend auf dem zweiten Startzeitpunkt und Bereitstellen von Potential $V_5$ von dem Multiplexer (106) für den ersten Eingang des Komparators (108);

bei einer dritten vorbestimmten Spannungsschwelle, die von der zweiten Spannungsrampe erreicht wird, wie durch den Komparator (108) bestimmt, Bestimmen, durch die Steuerung (110), eines Zeitpunkts $T_5$ basierend auf dem zweiten Startzeitpunkt und Bereitstellen von Potential $V_6$ von dem Multiplexer (106) für den ersten Eingang des Komparators (108);

bei einer vierten vorbestimmten Spannungsschwelle, die von der zweiten Spannungsrampe erreicht wird, wie durch den Komparator (108) bestimmt, Bestimmen, durch die Steuerung (110), eines Zeitpunkts $T_6$ basierend auf dem zweiten Startzeitpunkt; und

Speichern von Zeitpunkten $T'_2$, $T_5$ und $T_6$ in den Speicher (114).

3. Vorrichtung nach Anspruch 2, wobei die Stabilisierung von Potentialen $V_1$-$V_6$ ein Warten über eine vorbestimmte Wartezeit hinweg beinhaltet.

4. Vorrichtung nach einem der Ansprüche 1-3, wobei ein Wert des ersten Widerstands ($R_{POL}$) in Abhängigkeit von einem Wert einer Sensorimpedanz gewählt wird, um ein Signal-Rausch-Verhältnis zu verbessern.

5. Vorrichtung nach einem der Ansprüche 1-4, wobei die erste oder die zweite Spannungsrampe durch Anpassen eines Stromwerts der Stromquelle ($I_2$) angepasst werden kann.

6. Vorrichtung nach einem der Ansprüche 1-5, wobei die Zeitpunkte $T_2$, $T'_2$, $T_3$, $T_4$, $T_5$ und $T_6$ durch einen Prozessor (116) zum Berechnen eines Drucks abgerufen werden können.

7. Vorrichtung nach Anspruch 6, wobei der Prozessor (116) dafür ausgelegt ist, den Druck basierend auf der folgenden Gleichung zu berechnen:

$$P = k * \left( \frac{T5 - T2}{T6 - T2} - \frac{T3 - T'2}{T4 - T'2} \right)$$

wobei:

P der Druck ist; und
k eine Empfindlichkeit des Sensors (104) ist.

8. Vorrichtung nach Anspruch 6, wobei der Prozessor (116) dafür ausgelegt ist, den Druck basierend auf der folgenden Gleichung zu berechnen:

$$P = k * \left( \frac{T5 - T2}{T6 - T2} - \frac{T3 - T'2}{T4 - T'2} \right) + Pz$$

wobei:

P der Druck ist;
k eine Empfindlichkeit des Sensors (104) ist; und
Pz ein Versatz ist.

9. Vorrichtung nach einem der Ansprüche 6-8, wobei der Prozessor (116) dafür ausgelegt ist, den Druck unter Berücksichtigung von Rauschgrenzen zu berechnen.

10. Vorrichtung nach einem der Ansprüche 1-6, wobei die Wheatstone-Brücke (118) einen zusätzlichen Widerstand in jedem Zweig aufweist, der eine Spannung im Zusammenhang mit Zeitpunkten $T_4$ und $T_6$ weiter teilt, um ein Signal-Rausch-Verhältnis zu verbessern.

11. Vorrichtung nach Anspruch 10, wobei die Zeitpunkte $T_2$, $T'_2$, $T_3$, $T_4$, $T_5$ und $T_6$ durch einen Prozessor (116) zum Berechnen eines Drucks abgerufen werden können, und wobei der Prozessor (116) dafür ausgelegt ist, den Druck basierend auf der folgenden Gleichung zu berechnen:

$$P = k * n * \left( \frac{T5 - T2}{T6 - T2} - \frac{T3 - T'2}{T4 - T'2} \right) + P'z$$

wobei:

P der Druck ist;
k eine Empfindlichkeit des Sensors (104) ist;
n ein Faktor kleiner als 1 ist, der die weitere Spannungsteilung berücksichtigt; und
P'z ein Versatz ist.

12. Vorrichtung nach einem der Ansprüche 1-11, wobei die Vorrichtung in einer Fluiddosiervorrichtung ausgeführt ist und einen Fluiddruck misst.

13. Vorrichtung nach einem der Ansprüche 1-11, wobei die Vorrichtung in einer Gasdosiervorrichtung ausgeführt ist und einen Gasdruck misst.

14. Verfahren zur Druckmessung, umfassend:

Detektieren eines Drucks an einem Drucksensor (104), der eine Wheatstone-Brücke (118) mit einem ersten Verbindungspunkt ($CX_1$), einem zweiten Verbindungspunkt ($CX_2$), einem dritten Verbindungspunkt ($CX_3$) und einem vierten Verbindungspunkt ($CX_4$) aufweist, wobei der erste, der zweite und der vierte Verbindungspunkt Teil eines ersten Zweigs sind und der erste, der dritte und der vierte Verbindungspunkt Teil eines zweiten Zweigs sind;
Bereitstellen eines ersten Stroms durch den ersten Zweig;
bei einer Stabilisierung von Potentialen $V_1$-$V_6$, wobei Potentiale $V_6$ und $V_4$ an dem ersten Verbindungspunkt ($CX_1$) liegen, Potential $V_5$ an dem zweiten Verbindungspunkt ($CX_2$) liegt, Potential $V_3$ an dem dritten Verbindungspunkt ($CX_3$) liegt, Potential $V_2$ an dem vierten Verbindungspunkt ($CX_4$) liegt und $V_1$ zwischen zwei seriellen Widerständen ($R_{T1}$, $R_{T2}$) liegt, die ein erstes Ende aufweisen, das mit dem vierten Verbindungspunkt ($CX_4$) verbunden ist, und ein zweites Ende aufweisen, das mit Erde verbunden ist, und wobei Potentiale $V_1$-$V_6$ Eingaben für einen Multiplexer (106) sind, Bereitstellen von Potential $V_1$ von dem Multiplexer (106) für einen ersten Eingang eines Komparators (108);
Bereitstellen eines zweiten Stroms von einer Stromquelle ($I_2$), um einen Kondensator (C) zu laden, um eine erste Spannungsrampe an einem zweiten Eingang des Komparators (108) zu erzeugen, wobei der Kondensator (C) eine erste Seite, die mit dem zweiten Eingang des Komparators (108) und der zweiten Stromquelle ($I_2$) verbunden ist, und eine zweite Seite, die mit Erde verbunden ist, aufweist;
Erfassen eines ersten Startzeitpunkts;
bei einer ersten vorbestimmten Spannungsschwelle, die von der ersten Spannungsrampe erreicht wird, wie durch den Komparator (108) bestimmt, Bereitstellen von Potential $V_2$ von dem Multiplexer (106) für den ersten Eingang des Komparators (108);
bei einer zweiten vorbestimmten Spannungsschwelle, die von der ersten Spannungsrampe erreicht wird, wie durch den Komparator (108) bestimmt, Bestimmen eines Zeitpunkts $T_2$ basierend auf dem ersten Startzeitpunkt und Bereitstellen von Potential $V_3$ von dem Multiplexer (106) für den ersten Eingang des Komparators (108);
bei einer dritten vorbestimmten Spannungsschwelle, die von der ersten Spannungsrampe erreicht wird, wie durch den Komparator (108) bestimmt, Bestimmen eines Zeitpunkts $T_3$ basierend auf dem ersten Startzeitpunkt und Bereitstellen von Potential $V_4$ von dem Multiplexer (106) für den ersten Eingang des Komparators (108);
bei einer vierten vorbestimmten Spannungsschwelle, die von der ersten Spannungsrampe erreicht wird, wie durch den Komparator (108) bestimmt, Bestimmen eines Zeitpunkts $T_4$ basierend auf dem ersten Startzeitpunkt;
Speichern von Zeitpunkten $T_2$, $T_3$ und $T_4$ in einen Speicher (114);
Entladen des Kondensators (C);
Bereitstellen des ersten Stroms durch den zweiten Zweig;
bei Stabilisierung von Potentialen $V_1$-$V_6$, Bereitstellen von Potential $V_1$ von dem Multiplexer (106) für den ersten Eingang eines Komparators (108);
Bereitstellen des zweiten Stroms von der Stromquelle ($I_2$), um den Kondensator (C) zu laden, um eine zweite

**15**

Spannungsrampe an dem zweiten Eingang des Komparators (108) zu erzeugen;

Erfassen eines zweiten Startzeitpunkts;

bei der ersten vorbestimmten Spannungsschwelle, die von der zweiten Spannungsrampe erreicht wird, wie durch den Komparator (108) bestimmt, Bereitstellen von Potential $V_2$ von dem Multiplexer (106) für den ersten Eingang des Komparators (108);

bei einer zweiten vorbestimmten Spannungsschwelle, die von der zweiten Spannungsrampe erreicht wird, wie durch den Komparator (108) bestimmt, Bestimmen eines Zeitpunkts $T'_2$ basierend auf dem zweiten Startzeitpunkt und Bereitstellen von Potential $V_5$ von dem Multiplexer (106) für den ersten Eingang des Komparators (108);

bei einer dritten vorbestimmten Spannungsschwelle, die von der zweiten Spannungsrampe erreicht wird, wie durch den Komparator (108) bestimmt, Bestimmen eines Zeitpunkts $T_5$ basierend auf dem zweiten Startzeitpunkt und Bereitstellen von Potential $V_6$ von dem Multiplexer (106) für den ersten Eingang des Komparators (108);

bei einer vierten vorbestimmten Spannungsschwelle, die von der zweiten Spannungsrampe erreicht wird, wie durch den Komparator (108) bestimmt, Bestimmen eines Zeitpunkts $T_6$ basierend auf dem zweiten Startzeitpunkt;

Speichern von Zeitpunkten $T'_2$, $T_5$ und $T_6$ in den Speicher (114).

Abrufen, durch einen Prozessor (116), der gespeicherten Zeitpunkte $T_2$, $T'_2$, $T_3$, $T_4$, $T_5$ und $T_6$; und

Bestimmen, durch den Prozessor (116), des Drucks basierend auf den Zeitpunkten $T_2$, $T'_2$, $T_3$, $T_4$, $T_5$ und $T_6$.

**15.** Verfahren nach Anspruch 14, wobei das Bestimmen des Drucks eines oder mehrere von einer Empfindlichkeit des Sensors, einem Versatz oder einem Rauschfaktor berücksichtigt.

## Revendications

**1.** Dispositif de mesure de pression, le dispositif comprenant:

un multiplexeur (106) présentant au moins six entrées, dans lequel six desdites au moins six entrées sont couplées à des points de connexion d'un capteur (104) constitué d'un pont de Wheatstone (118), d'une première résistance ($R_{POL}$), et de deux résistances de transition en série ($R_{T1}$, $R_{T2}$), dans lequel le pont de Wheatstone (118) présente un premier point de connexion ($CX_1$) pour fournir un potentiel $V_4$ ou $V_6$, un deuxième point de connexion ($CX_2$) pour fournir un potentiel $V_5$, un troisième point de connexion ($CX_3$) pour fournir un potentiel $V_3$, et un quatrième point de connexion ($CX_4$) pour fournir un potentiel $V_2$, dans lequel les premier, troisième et quatrième points de connexion font partie d'une première branche, et les premier, deuxième et quatrième points de connexion font partie d'une seconde branche, dans lequel la première résistance ($R_{POL}$) est couplée au premier point de connexion ($CX_1$), dans lequel les deux résistances de transition en série ($R_{T1}$, $R_{T2}$) sont couplées au quatrième point de connexion ($CX_4$) à une première extrémité et à la terre à une seconde extrémité, et dans lequel un cinquième point de connexion est situé entre les deux résistances de transition en série ($R_{T1}$, $R_{T2}$) pour fournir un potentiel $V_1$;

un comparateur (108) présentant une première entrée et une seconde entrée, la première entrée étant couplée à une sortie du multiplexeur (106);

un condensateur (C) présentant un premier côté couplé à la seconde entrée du comparateur (108) et un second côté couplé à la terre;

une source de courant ($I_2$) couplée à la seconde entrée du comparateur (108) et au premier côté du condensateur (C) pour charger le condensateur (C);

un dispositif de commande (110) couplé de façon communicante à une sortie du comparateur (108); et

une mémoire (114) couplée de façon communicante au dispositif de commande (110),

dans lequel le dispositif est configuré de manière à :

en deux cycles respectifs, un cycle pour chacune des première et seconde branches, déterminer par le dispositif de commande (110), et enregistrer dans la mémoire (114), des temps respectifs $T_2$, $T_3$, et $T_4$ auxquels chacun des potentiels respectifs $V_2$, $V_3$, et $V_4$ est atteint par une première rampe de tension produite par le condensateur (C) dans la première branche, et des temps respectifs $T'_2$, $T_5$, et $T_6$ auxquels chacun des potentiels respectifs $V_2$, $V_5$, et $V_6$ est atteint par une seconde rampe de tension produite par le condensateur (C) dans la seconde branche, dans lequel le condensateur (C) est déchargé entre les deux cycles.

**2.** Dispositif selon la revendication 1, dans lequel le dispositif est configuré de manière à, lors de la détection d'une pression au capteur (104), déterminer et enregistrer des temps $T_2$, $T'_2$, $T_3$, $T_4$, $T_5$, et $T_6$ en:

faisant circuler un premier courant à travers la première branche;

lors de la stabilisation des potentiels $V_1$-$V_6$, fournir le potentiel $V_1$ à partir du multiplexeur (106) à la première entrée du comparateur (108);

générer un deuxième courant à partir de la source de courant ($I_2$) pour charger le condensateur (C) pour créer la première rampe de tension à la seconde entrée du comparateur (108);

capturer un premier temps de démarrage;

à un premier seuil de tension prédéterminé atteint par la première rampe de tension déterminée par le comparateur (108), fournir le potentiel $V_2$ à partir du multiplexeur (106) à la première entrée du comparateur (108) ;

à un deuxième seuil de tension prédéterminé atteint par la première rampe de tension déterminée par le comparateur (108), déterminer, par le dispositif de commande (110), un temps $T_2$ sur la base du premier temps de démarrage et fournir le potentiel $V_3$ à partir du multiplexeur (106) à la première entrée du comparateur (108) ;

à un troisième seuil de tension prédéterminé atteint par la première rampe de tension déterminée par le comparateur (108), déterminer, par le dispositif de commande (110), un temps $T_3$ sur la base du premier temps de démarrage et fournir le potentiel $V_4$ à partir du multiplexeur (106) à la première entrée du comparateur (108) ;

à un quatrième seuil de tension prédéterminé atteint par la première rampe de tension déterminée par le comparateur (108), déterminer, par le dispositif de commande (110), un temps $T_4$ sur la base du premier temps de démarrage;

sauvegarder les temps $T_2$, $T_3$, et $T_4$ dans la mémoire (114) ;

décharger le condensateur (C);

fournir le premier courant à travers la seconde branche;

lors de la stabilisation des potentiels $V_1$-$V_6$, fournir le potentiel $V_1$ à partir du multiplexeur (106) à la première entrée d'un comparateur (108);

fournir le deuxième courant à partir de la source de courant ($I_2$) afin de charger le condensateur (C) pour créer la seconde rampe de tension à la seconde entrée du comparateur (108);

capturer un second temps de démarrage;

au premier seuil de tension prédéterminé atteint par la seconde rampe de tension déterminée par le comparateur (108), fournir le potentiel $V_2$ à partir du multiplexeur (106) à la première entrée du comparateur (108) ;

à un deuxième seuil de tension prédéterminé atteint par la seconde rampe de tension déterminée par le comparateur (108), déterminer, par le dispositif de commande (110), un temps $T'_2$ sur la base du second temps de démarrage et fournir le potentiel $V_5$ à partir du multiplexeur (106) à la première entrée du comparateur (108) ;

à un troisième seuil de tension prédéterminé atteint par la seconde rampe de tension déterminée par le comparateur (108), déterminer, par le dispositif de commande (110), un temps $T_5$ sur la base du second temps de démarrage et fournir le potentiel V6 à partir du multiplexeur (106) à la première entrée du comparateur (108) ;

à un quatrième seuil de tension prédéterminé atteint par la seconde rampe de tension déterminée par le comparateur (108), déterminer, par le dispositif de commande (110), un temps $T_6$ sur la base du second temps de démarrage; et

sauvegarder les temps $T'_2$, $T_5$, et $T_6$ dans la mémoire (114).

**3.** Dispositif selon la revendication 2, dans lequel la stabilisation des potentiels $V_1$-$V_6$ comprend une attente pendant un temps d'attente prédéterminé.

**4.** Dispositif selon l'une quelconque des revendications 1 à 3, dans lequel une valeur de la première résistance ($R_{POL}$) est choisie en fonction d'une valeur d'une impédance de capteur afin d'améliorer un rapport signal - bruit.

**5.** Dispositif selon l'une quelconque des revendications 1 à 4, dans lequel la première ou la seconde rampe de tension est réglable en réglant une valeur de courant de la source de courant ($I_2$).

**6.** Dispositif selon l'une quelconque des revendications 1 à 5, dans lequel les temps $T_2$, $T'_2$, $T_3$, $T_4$, $T_5$, et $T_6$ sont récupérables par un processeur (116) pour calculer une pression.

**7.** Dispositif selon la revendication 6, dans lequel le processeur (116) est configuré de manière à calculer la pression sur la base de l'équation suivante:

$$P = k * \left( \frac{T5 - T2}{T6 - T2} - \frac{T3 - T'2}{T4 - T'2} \right)$$

dans laquelle:

P est la pression; et

k est une sensibilité du capteur (104).

**8.** Dispositif selon la revendication 6, dans lequel le processeur (116) est configuré de manière à calculer la pression sur la base de l'équation suivante:

$$P = k * \left( \frac{T5 - T2}{T6 - T2} - \frac{T3 - T'2}{T4 - T'2} \right) + Pz$$

dans laquelle:

P est la pression;
k est une sensibilité du capteur (104); et
Pz est un décalage.

**9.** Dispositif selon l'une quelconque des revendications 6 à 8, dans lequel le processeur (116) est configuré de manière à calculer la pression en tenant compte des limites de bruit.

**10.** Dispositif selon l'une quelconque des revendications 1 à 6, dans lequel le pont de Wheatstone (118) comprend une résistance supplémentaire dans chaque branche qui divise en plus la tension relative aux temps $T_4$ et $T_6$ afin d'améliorer le rapport signal - bruit.

**11.** Dispositif selon la revendication 10, dans lequel les temps $T_2$, $T'_2$, $T_3$, $T_4$, $T_5$, et $T_6$ sont récupérables par un processeur (116) pour calculer une pression, et dans lequel le processeur (116) est configuré de manière à calculer la pression sur la base de l'équation suivante:

$$P = k * n * \left( \frac{T5 - T2}{T6 - T2} - \frac{T3 - T'2}{T4 - T'2} \right) + P'z$$

dans laquelle:

P est la pression;
k est une sensibilité du capteur (104);
n est un facteur inférieur à 1 qui tient compte de la division de tension supplémentaire; et
P'z est un décalage.

**12.** Dispositif selon l'une quelconque des revendications 1 à 11, dans lequel le dispositif est incorporé dans un dispositif de dosage de fluide et mesure une pression de fluide.

**13.** Dispositif selon l'une quelconque des revendications 1 à 11, dans lequel le dispositif est incorporé dans un dispositif de dosage de gaz et mesure une pression de gaz.

**14.** Procédé de mesure de pression, comprenant les étapes suivantes:

détecter une pression au niveau d'un capteur de pression (104) comprenant un pont de Wheatstone (118) présentant un premier point de connexion ($CX_1$), un deuxième point de connexion ($CX_2$), un troisième point de connexion ($CX_3$), et un quatrième point de connexion ($CX_4$), dans lequel les premier, deuxième et quatrième points de connexion font partie d'une première branche, et les premier, troisième et quatrième points de connexion font partie d'une seconde branche;
fournir un premier courant à travers la première branche;
lors de la stabilisation des potentiels $V_1$-$V_6$, dans lequel les potentiels $V_6$ et $V_4$ sont situés au premier point de connexion ($CX_1$), le potentiel $V_5$ est situé au deuxième point de connexion ($CX_2$), le potentiel $V_3$ est situé au troisième point de connexion ($CX_3$), le potentiel $V_2$ est situé au quatrième point de connexion ($CX_4$), et $V_1$ est situé entre deux résistances en série ($RT_1$, $RT_2$) présentant une première extrémité couplée au quatrième point

de connexion (CX$_4$) et présentant une seconde extrémité couplée à la terre, et dans lequel les potentiels V$_1$-V$_6$ sont des entrées à un multiplexeur (106), fournissant le potentiel V$_1$ à partir du multiplexeur (106) à une première entrée d'un comparateur (108);

fournir un deuxième courant à partir d'une source de courant (I$_2$) afin de charger un condensateur (C) pour créer une première rampe de tension à une seconde entrée du comparateur (108), le condensateur (C) présentant un premier côté couplé à la seconde entrée du comparateur (108) et à la seconde source de courant (I$_2$), et un second côté couplé à la terre;

capturer un premier temps de démarrage;

à un premier seuil de tension prédéterminé atteint par la première rampe de tension déterminée par le comparateur (108), fournir le potentiel V$_2$ à partir du multiplexeur (106) à la première entrée du comparateur (108) ;

à un deuxième seuil de tension prédéterminé atteint par la première rampe de tension déterminée par le comparateur (108), déterminer un temps T$_2$ sur la base du premier temps de démarrage et fournir le potentiel V$_3$ à partir du multiplexeur (106) à la première entrée du comparateur (108);

à un troisième seuil de tension prédéterminé atteint par la première rampe de tension déterminée par le comparateur (108), déterminer un temps T$_3$ sur la base du premier temps de démarrage et fournir le potentiel V$_4$ à partir du multiplexeur (106) à la première entrée du comparateur (108);

à un quatrième seuil de tension prédéterminé atteint par la première rampe de tension déterminée par le comparateur (108), déterminer un temps T$_4$ sur la base du premier temps de démarrage;

sauvegarder les temps T$_2$, T$_3$, et T$_4$ dans une mémoire (114);

décharger le condensateur (C);

fournir le premier courant à travers la seconde branche;

lors de la stabilisation des potentiels V$_1$-V$_6$, fournir le potentiel V$_1$ à partir du multiplexeur (106) à la première entrée d'un comparateur (108);

fournir le deuxième courant à partir de la source de courant (I$_2$) afin de charger le condensateur (C) pour créer une seconde rampe de tension à la seconde entrée du comparateur (108);

capturer un second temps de démarrage;

au premier seuil de tension prédéterminé atteint par la seconde rampe de tension déterminée par le comparateur (108), fournir le potentiel V$_2$ à partir du multiplexeur (106) à la première entrée du comparateur (108) ;

à un deuxième seuil de tension prédéterminé atteint par la seconde rampe de tension déterminée par le comparateur (108), déterminer un temps T'$_2$ sur la base du second temps de démarrage et fournir le potentiel V$_5$ à partir du multiplexeur (106) à la première entrée du comparateur (108);

à un troisième seuil de tension prédéterminé atteint par la seconde rampe de tension déterminée par le comparateur (108), déterminer un temps T$_5$ sur la base du second temps de démarrage et fournir le potentiel V$_6$ à partir du multiplexeur (106) à la première entrée du comparateur (108);

à un quatrième seuil de tension prédéterminé atteint par la seconde rampe de tension déterminée par le comparateur (108), déterminer un temps T$_6$ sur la base du second temps de démarrage;

sauvegarder les temps T'$_2$, T$_5$, et T$_6$ dans la mémoire (114);

récupérer, par un processeur (116), les temps T$_2$, T'$_2$, T$_3$, T$_4$, T$_5$, et T$_6$ sauvegardés; et

déterminer, par le processeur (116), la pression sur la base des temps T$_2$, T'$_2$, T$_3$, T$_4$, T$_5$, et T$_6$.

**15.** Procédé selon la revendication 14, dans lequel la détermination de la pression prend en considération un un ou plusieurs facteur(s) parmi une sensibilité du capteur, un décalage ou un facteur de bruit.

**FIG. 1**

**FIG. 2A**

**FIG. 2B**

300

Ur

S+

S-

Lo

**FIG. 3**

400    C1  Sig+    C1  Sig-    C2  Sig-    C2  Sig+

10msec.    10msec.    10msec.

**FIG. 4**

**FIG. 5A**

**FIG. 5B**

FIG. 6

$y = 1x + 0.0049$

742

Series1

Linear (Series1)

744

BARS (PRESSURE MEASURED)

BARS (PRESSURE APPLIED)

**FIG. 7**

800

802
DETECT PRESSURE AT SENSOR

804
PROVIDE FIRST CURRENT TO FIRST BRANCH OF BRIDGE

806
UPON STABILIZATION OF BRIDGE POTENTIALS AND TRANSITION POTENTIAL AS INPUTS TO MULTIPLEXER, PROVIDE TRANSITION POTENTIAL FROM MULTIPLEXER TO FIRST INPUT OF COMPARATOR

808
PROVIDE SECOND CURRENT TO CHARGE CAPACITOR TO CREATE FIRST VOLTAGE RAMP AT SECOND INPUT OF COMPARATOR

810
CAPTURE FIRST STARTING TIME

812
AT FIRST VOLTAGE THRESHOLD REACHED BY FIRST VOLTAGE RAMP, PROVIDE POTENTIAL V2 TO FIRST COMPARATOR INPUT

814
AT SECOND VOLTAGE THRESHOLD REACHED BY FIRST VOLTAGE RAMP, DETERMINE A TIME T2 BASED ON FIRST STARTING TIME AND PROVIDE POTENTIAL V3 TO FIRST COMPARATOR INPUT

816
AT THIRD VOLTAGE THRESHOLD REACHED BY FIRST VOLTAGE RAMP, DETERMINE A TIME T3 BASED ON FIRST STARTING TIME AND PROVIDE POTENTIAL V4 TO FIRST COMPARATOR INPUT

818
AT FOURTH VOLTAGE THRESHOLD REACHED BY FIRST VOLTAGE RAMP, DETERMINE A TIME T4 BASED ON FIRST STARTING TIME

820
SAVE TIMES T2, T3, AND T4 TO A MEMORY → (A)

**FIG. 8A**

800 Cont'd

(A)

— 822

DISCHARGE CAPACITOR

— 824

PROVIDE FIRST CURRENT THROUGH SECOND BRANCH

— 826

UPON STABILIZATION OF BRIDGE POTENTIALS AND TRANSITION POTENTIAL AS INPUTS TO MULTIPLEXER, PROVIDE TRANSITION POTENTIAL FROM MULTIPLEXER TO FIRST INPUT OF COMPARATOR

— 828

PROVIDE SECOND CURRENT TO CHARGE CAPACITOR TO CREATE SECOND VOLTAGE RAMP AT SECOND INPUT OF COMPARATOR

— 830

CAPTURE SECOND STARTING TIME

— 832

AT FIRST VOLTAGE THRESHOLD REACHED BY SECOND VOLTAGE RAMP, PROVIDE POTENTIAL V2 TO FIRST COMPARATOR INPUT

— 834

AT SECOND VOLTAGE THRESHOLD REACHED BY SECOND VOLTAGE RAMP, DETERMINE A TIME T'2 BASED ON SECOND STARTING TIME AND PROVIDE POTENTIAL V5 TO FIRST COMPARATOR INPUT

— 836

AT THIRD VOLTAGE THRESHOLD REACHED BY SECOND VOLTAGE RAMP, DETERMINE A TIME T5 BASED ON SECOND STARTING TIME AND PROVIDE POTENTIAL V6 TO FIRST COMPARATOR INPUT

— 838

AT FOURTH VOLTAGE THRESHOLD REACHED BY FIRST VOLTAGE RAMP, DETERMINE A TIME T6 BASED ON SECOND STARTING TIME

— 840

FIG. 8B

SAVE TIMES T'2, T5, AND T6 TO THE MEMORY

FROM 840

RETRIEVE SAVED TIMES T2, T'2, T3, T4, T5, AND T6 — 902

DETERMINE PRESSURE BASED ON TIMES T2, T'2, T3, T4, T5, AND T6 AND OPTIONALLY ONE OR MORE OF A SENSITIVITY FACTOR OF THE SENSOR, AN OFFSET, OR A NOISE FACTOR — 904

**FIG. 9**

1000

PROCESSOR(S)
1082

MEMORY
1092

COMMUNICATION
INTERFACE(S)
1090

INPUT(S) /
OUTPUT(S)
1088

MEMORY
1084

SECONDARY STORAGE DEVICE(S)
1086

DATA
1096

PROCESSING
LOGIC
1094

**FIG. 10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 10131229 A